# EUROPEAN PATENT SPECIFICATION

(11) **EP 4 478 471 B1**
(45) Date of publication and mention of the grant of the patent: **07.10.2026**
(21) Application number: 23752911.0
(22) Date of filing: 08.02.2023
(51) Int. Cl.: H01M 50/491, H01M 4/04, H01M 4/38, H01M 10/0587, H01M 10/42, H01M 50/403, H01M 50/474, H01M 50/477, H01M 10/052, H01M 50/449, H01M 50/46

(54) **SECONDARY BATTERY AND METHOD FOR PRODUCING SECONDARY BATTERY**
SEKUNDÄRBATTERIE UND VERFAHREN ZUR HERSTELLUNG EINER SEKUNDÄRBATTERIE
BATTERIE SECONDAIRE ET PROCÉDÉ DE PRODUCTION DE BATTERIE SECONDAIRE

(30) Priority: 09.02.2022 JP 2022018549
(43) Date of publication of application: 18.12.2024
(73) Proprietor: Panasonic Intellectual Property Management Co., Ltd., Kadoma-shi, Osaka 571-0057 (JP)
(72) Inventor: OKIMOTO, Rikiya, Osaka 571-0057 (JP); MIYAMAE, Ryohei, Osaka 571-0057 (JP)
(74) Representative: Eisenführ Speiser
(86) International application number: PCT/JP2023/004221
(87) International publication number: WO 2023/153447

(56) References cited:
- WO-A1-2020/066254
- WO-A1-2022/045127
- JP-A- H1 012 279
- US-A1- 2019 372 124

## Description

### TECHNICAL FIELD

The present disclosure relates to a secondary battery and a method for producing a secondary battery.

### BACKGROUND ART

A lithium secondary battery according to US 2019/372124 A1 comprises an electrode group and a nonaqueous electrolyte having lithium-ion conductivity. A negative electrode current collector has a first surface facing outward of winding of the electrode group and a second surface facing inward of the winding of the electrode group. At least the first surface or the second surface includes a first region and a second region that is closer to an innermost circumference of the winding of the electrode group than the first region. Protrusions include outer-circumference-side protrusions disposed on the first region and inner-circumference-side protrusions disposed on the second region. In at least the first surface or the second surface, a first area rate is larger than a second area rate.

In order to prevent damage of a separator and abnormal deposition of lithium, suppress internal short-circuiting and attain life extension of a battery, by storing lithium deposited in a negative electrode surface to a buffer void formed between a negative or positive electrode and the separator, it is proposed in JP H10 12279 A that, in a winding electrode of a metal lithium secondary battery, a spacer is positioned in both ends in an axial direction of a separator and a negative electrode, to be arranged in a belt shape along a lengthwise direction of the separator and the negative electrode, between the separator and the negative electrode, a buffer void of almost fixed distance is formed. As a result, even when negative electrode lithium is fine granulated to expand the volume due to repetition of charge/discharge, till filling this buffer void with the expanded deposition lithium, the deposited lithium, pressing the separator and abnormally precipitating in its fine hole, is prevented from leading to a positive electrode.

A lithium secondary battery according to WO 2022/045127 A1 comprises: a positive electrode; a negative electrode; a porous separator disposed between the positive electrode and the negative electrode; a spacer disposed between the positive electrode and/or the negative electrode, and the separator; and a non-aqueous electrolyte having lithium ion conductivity. At the negative electrode, lithium metal is deposited during charging, and the lithium metal is dissolved during discharging. The region of the negative electrode facing the positive electrode includes a first region which faces the spacer, and a second region which does not face the spacer. The spacer is non-porous or porous, and the height of the spacer is 20 µm or more. When the spacer is porous, the porosity of the spacer is no more than the porosity of the separator. WO 2022/045127 A1 was published after the priority date of the present application and is therefore only prior art under Art. 54(3) EPC and not relevant for the assessment of inventiveness.

Lithium-ion batteries are known as high-capacity non-aqueous electrolyte secondary batteries. Also, as non-aqueous electrolyte secondary batteries having higher capacities than lithium-ion batteries, lithium secondary batteries (lithium metal secondary batteries) are known. In such a secondary battery, lithium metal deposits on the negative electrode during charging, which may cause the electrode group to expand and break. Meanwhile, Patent Literature 1, for example, discloses a secondary battery in which a spacer is provided between the positive electrode and the separator so that a space for accommodating lithium metal is formed between the positive electrode and the negative electrode.

### RELATED-ART LITERATURE

### PATENT LITERATURE

Patent Literature 1: WO2020/066254

### SUMMARY OF INVENTION

### TECHNICAL PROBLEM

The inventors have found a technology for further suppressing the expansion of the electrode group caused by lithium metal deposition and improving the quality of the secondary battery, such as durability and reliability.

The present disclosure has been made in view of such a situation, and a purpose thereof is to provide a technology for improving the quality of secondary batteries.

### SOLUTION TO PROBLEM

One embodiment of the present disclosure is a secondary battery as defined in claim 1.

Another embodiment of the present disclosure is a method for producing a secondary battery as defined in claim 6.

Yet another embodiment of the present disclosure is a method for producing a secondary battery as defined in claim 7.

Optional combinations of the aforementioned constituting elements, and implementation of the present disclosure in the form of methods, apparatuses, or systems may also be practiced as additional modes of the present disclosure.

### ADVANTAGEOUS EFFECTS OF INVENTION

According to the present disclosure, the quality of secondary batteries can be improved.

### BRIEF DESCRIPTION OF DRAWINGS

[FIG. 1] FIG. 1 is a sectional view of a secondary battery.
[FIG. 2] FIG. 2 is a magnified sectional view of part of an electrode group according to a first embodiment.
[FIGS. 3] FIG. 3A, FIG. 3B, FIG. 3C and FIG. 3D are diagrams that show a method for producing the secondary battery according to the first embodiment.
[FIGS. 4] FIG. 4A is a SEM photograph of an ink-unapplied area of a separator. FIG. 4B is a SEM photograph of an ink-applied area of the separator.
[FIGS. 5] FIG. 5A, FIG. 5B and FIG. 5C are diagrams that show a method for producing a secondary battery according to a second embodiment.
[FIGS. 6] FIG. 6A is a SEM photograph of an unpressurized area of the separator. FIG. 6B is a SEM photograph of a pressurized area of the separator.
[FIG. 7] FIG. 7 is a magnified sectional view of part of an electrode group according to a first modification.

### DESCRIPTION OF EMBODIMENTS

In the following, the present disclosure will be described based on preferred embodiments with reference to the drawings. The embodiments are intended to be illustrative only and not to limit the present disclosure, so that it should be understood that not all of the features or combinations thereof described in the embodiments are necessarily essential to the present disclosure. Like reference characters denote like or corresponding constituting elements, members, and processes in each drawing, and repetitive description will be omitted as appropriate. Also, the scale or shape of each component shown in each drawing is defined for the sake of convenience to facilitate the explanation and is not to be regarded as limitative unless otherwise specified. Also, when the terms "first", "second", and the like are used in the present specification or claims, such terms do not imply any order or degree of importance and are used to distinguish one configuration from another, unless otherwise specified. Further, in each drawing, part of a member less important in describing the embodiments may be omitted.

### First Embodiment

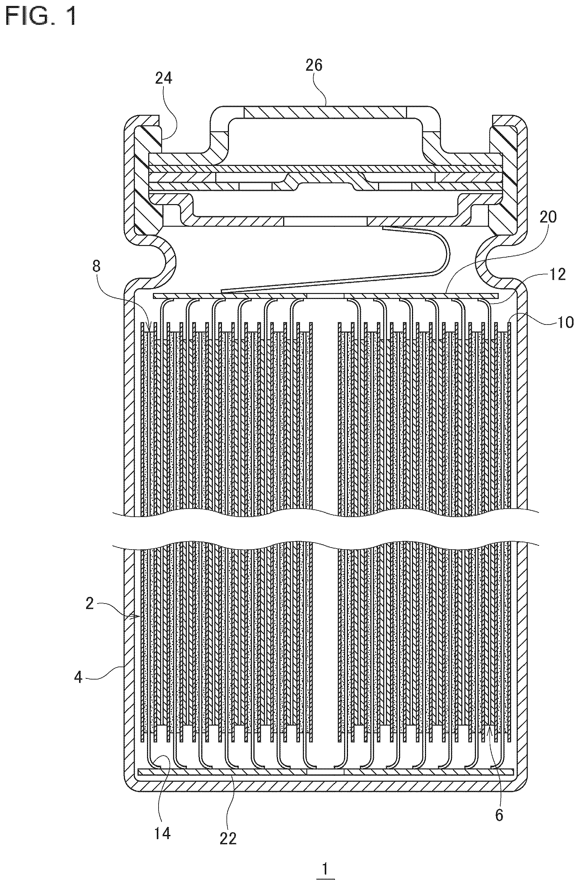

FIG. 1 is a sectional view of a secondary battery 1. In FIG. 1, illustration of a spacer 36 and a low porosity portion 38 is omitted. The secondary battery 1 is a battery in which lithium metal deposits on the negative plate during charging, and lithium metal dissolves in a non-aqueous electrolyte during discharge. Examples of such a secondary battery 1 include lithium-ion batteries and lithium secondary batteries. The secondary battery 1 as an example has a structure in which an electrode group 2 is housed together with a non-aqueous electrolyte (not illustrated) in an exterior can 4. The electrode group 2 is cylindrical, for example, and has a wound structure in which a positive plate 6 of band shape and a negative plate 8 of band shape are laminated, with a separator 10 of band shape provided therebetween, and wound in a spiral shape.

The positive plate 6 has a structure in which a positive electrode mixture layer is laminated onto a positive current collector. The positive current collector is constituted by aluminum foil or the like. The positive electrode mixture layer can be formed by applying a positive electrode mixture to a surface of the positive current collector using a publicly-known coating device and by drying and rolling the positive electrode mixture. The positive electrode mixture is obtained by kneading materials, such as a positive electrode active material, a binding agent, and a conductive material, into a dispersion medium so that the materials are dispersed uniformly. The positive electrode active material may be, for example, a composite oxide containing lithium and a transition metal other than lithium. The lithium contained in the composite oxide is released as lithium ions from the positive plate 6 during charging and deposits as lithium metal on the negative plate 8. The lithium metal that has deposited dissolves during discharge, and lithium ions released at the time are occluded by the composite oxide of the positive plate 6.

The negative plate 8 has a structure in which a negative electrode mixture layer is laminated onto a negative current collector. The negative current collector is constituted by copper foil or the like. The negative electrode mixture layer can be formed by applying a negative electrode mixture to a surface of the negative current collector using a publicly-known coating device and by drying and rolling the negative electrode mixture. The negative electrode mixture is obtained by kneading materials, such as a negative electrode active material, a binding agent, and a conductive material, into a dispersion medium so that the materials are dispersed uniformly. The negative electrode active material may be graphite or the like in the case of a lithium-ion battery and may be lithium metal or the like in the case of a lithium secondary battery, for example.

The positive plate 6 has a first unapplied portion 12 on which the positive electrode mixture is not applied, at one end of a width direction, which is a direction intersecting a longitudinal direction of the band. Also, the negative plate 8 has a second unapplied portion 14 on which the negative electrode mixture is not applied, at the other end of the width direction, i.e., at the end opposite to the side where the first unapplied portion 12 protrudes.

The separator 10 is a porous member disposed between the positive plate 6 and the negative plate 8. As an example, a porous sheet having ion permeability and insulation properties is used for the separator 10. The porous sheet may be a thin film having micropores, woven fabric, or non-woven fabric, for example. A constituent material of the separator 10 may be, for example, a polymer material, such as olefin resin including polyethylene, polyamide resin, or cellulose. The separator 10 may contain an additive, such as an inorganic filler, as necessary.

On the side where the first unapplied portion 12 protrudes in the electrode group 2, a positive current collector plate 20 is disposed. The positive current collector plate 20 may be made of aluminum, for example. To the positive current collector plate 20, the first unapplied portion 12 is joined. On the side where the second unapplied portion 14 protrudes in the electrode group 2, a negative current collector plate 22 is disposed. The negative current collector plate 22 may be made of copper, nickel, nickel-plated copper, or nickel-plated iron, for example. To the negative current collector plate 22, the second unapplied portion 14 is joined.

The electrode group 2 with the positive current collector plate 20 and the negative current collector plate 22 joined thereto is housed together with a non-aqueous electrolyte in the exterior can 4 of bottomed cylindrical shape. The non-aqueous electrolyte may be constituted by a publicly-known material having lithium ion conductivity. As an example, the non-aqueous electrolyte contains a non-aqueous solvent, such as an ester or an ether, and lithium ions dissolved in the non-aqueous solvent. The exterior can 4 may be made of copper, nickel, iron, or an alloy thereof, for example. The negative current collector plate 22 is joined to an inner bottom surface of the exterior can 4 by welding or the like. The positive current collector plate 20 is joined, by welding or the like, to a sealing plate 26 made of metal similar to the exterior can 4. The sealing plate 26 is fitted into an opening of the exterior can 4 via an insulating gasket 24. Accordingly, the electrode group 2 and the non-aqueous electrolyte are sealed inside the exterior can 4.

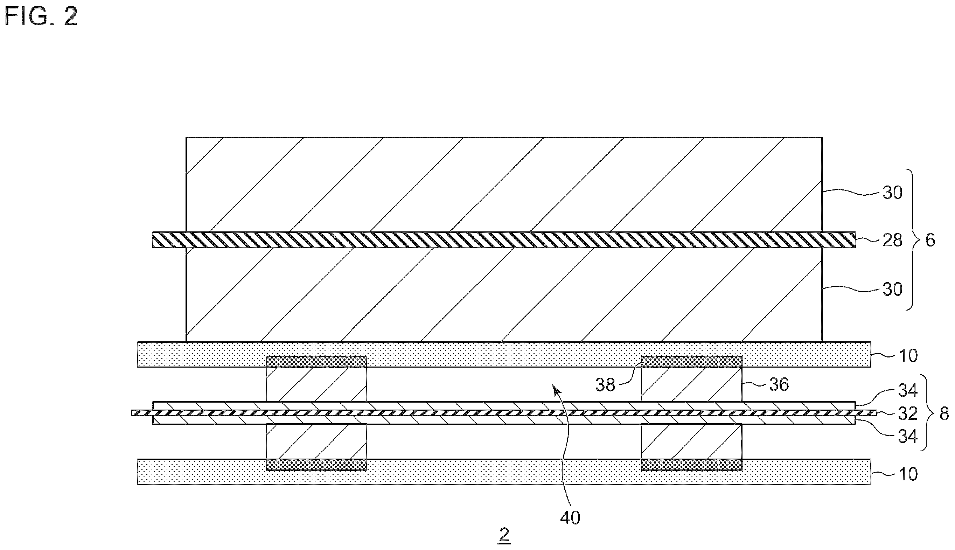

In the following, the structure of the electrode group 2 will be described in detail. FIG. 2 is a magnified sectional view of part of the electrode group 2 according to the first embodiment. FIG. 2 illustrates a cross section in a direction perpendicular to a longitudinal direction of the electrode group 2 before being wound. As described previously, the electrode group 2 includes the positive plate 6, the negative plate 8, and the separator 10. The positive plate 6 has a structure in which a positive electrode mixture layer 30 is laminated onto a positive current collector 28. The negative plate 8 has a structure in which a negative electrode mixture layer 34 is laminated onto a negative current collector 32. The separator 10 is disposed between the positive plate 6 and the negative plate 8.

The electrode group 2 also includes spacers 36 and low porosity portions 38. Each spacer 36 is interposed between the negative plate 8 and the separator 10 to form a space 40 between the negative plate 8 and the separator 10. This space 40 can accommodate lithium metal that deposits on the negative plate 8 when the secondary battery 1 is charged. In other words, lithium metal deposits within the space 40. This can suppress the expansion of the electrode group 2 due to the deposition of lithium metal.

Each spacer 36 is a column or convex portion protruding from a surface of the negative plate 8 toward the separator 10 or from a surface of the separator 10 toward the negative plate 8. As an example, the spacers 36 are constituted by multiple resin blocks. Examples of the resin constituting the spacers 36 include olefin resin, acrylic resin, polyamide resin, polyimide resin, silicone resin, and epoxy resin. The spacers 36 suitably have a smaller porosity than the separator 10.

The spacers 36 are structured such that multiple resin blocks are arranged at predetermined intervals in an in-plane direction of the separator 10, in other words, a direction in which the separator 10 extends. Each resin block may be of polygonal (e.g., hexagonal) or linear shape when viewed from a laminating direction of the negative plate 8 and the separator 10. When viewed from the laminating direction, the area of portions where the spacers 36 overlap with the separator 10 may suitably be 30% or less of the total area of the separator 10. An average height, or the dimension in the laminating direction of the negative plate 8 and the separator 10, of each spacer 36 may be in the range from 15 µm to 120 µm inclusive, for example.

Each low porosity portion 38 is fitted into the separator 10 in an area where the separator 10 and a spacer 36 overlap when viewed from the laminating direction of the separator 10 and the negative plate 8. That is, at least part of each low porosity portion 38 is located inside the separator 10, with respect to the surface of the separator 10 in an area where the spacers 36 are not provided. Each low porosity portion 38 is interposed between the separator 10 and a spacer 36. The low porosity portions 38 have a smaller porosity than the separator 10. Examples of a constituent material of the low porosity portions 38 may be similar to those of a constituent material of the spacers 36.

When viewed from an in-plane direction of the separator 10, the dimension in the in-plane direction of each low porosity portion 38 may suitably be 50% or greater of the dimension in the in-plane direction of each resin block. Also, the fitting depth of the portion of each low porosity portion 38 fitted into the separator 10 may suitably be 10% or greater of the thickness of the separator 10.

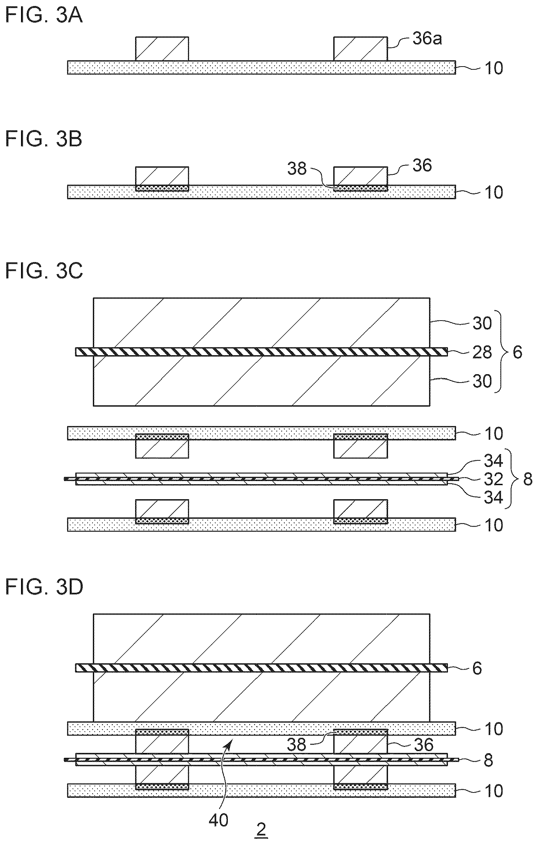

As an example, a low porosity portion 38 is constituted by a portion where pores in the separator 10 are closed up. Each low porosity portion 38 in the present embodiment is constituted by a portion where pores in the separator 10 are filled with the constituent material of the spacers 36. The secondary battery 1 including such a low porosity portion 38 can be obtained using the following producing method, for example. FIG. 3A through FIG. 3D are diagrams that show a method for producing the secondary battery 1 according to the first embodiment.

First, as shown in FIG. 3A, constituent material ink 36a of the spacers 36 is applied to a surface of the separator 10 that is to face the negative plate 8. As an example, the constituent material ink 36a is a solution in which the resin constituting the spacers 36 is dispersed in a publicly-known solvent. For the application of the constituent material ink 36a, a publicly-known method may be employed, such as gravure printing, dispenser printing, and screen printing. Thereafter, as shown in FIG. 3B, part of the constituent material ink 36a is infiltrated into pores in the separator 10. The constituent material ink 36a is then dried. Thus, the spacers 36 protruding from the surface of the separator 10 are formed. Also, the infiltrated constituent material ink 36a fills pores in the separator 10, so that the pores are closed up, and the low porosity portions 38 are formed.

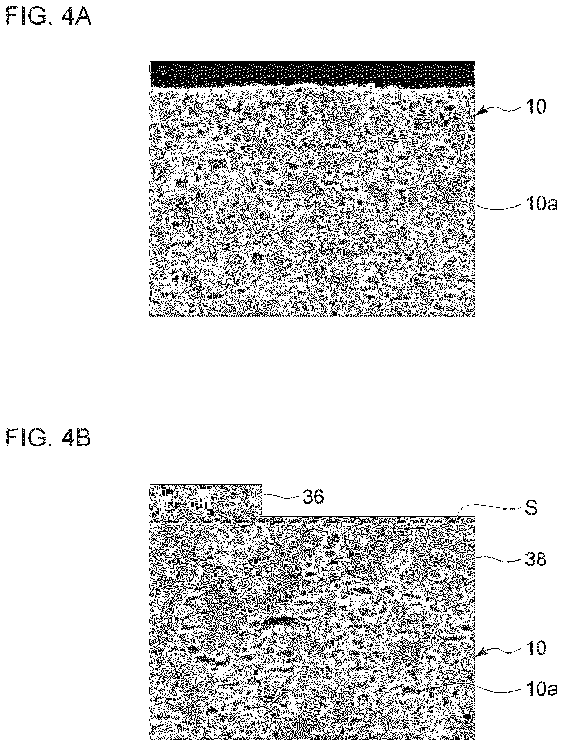

FIG. 4A is a scanning electron microscope (SEM) photograph of an ink-unapplied area in the separator 10. FIG. 4B is a SEM photograph of an ink-applied area in the separator 10. As shown in FIG. 4A, in an area where the constituent material ink 36a is not applied in the separator 10, a large number of pores 10a can be seen within the separator 10. On the other hand, as shown in FIG. 4B, in an area where the constituent material ink 36a is applied in the separator 10, some of the pores 10a are closed up by the constituent material ink 36a, and a low porosity portion 38 is formed within the separator 10. Also, a spacer 36 integrated with the low porosity portion 38 protrudes from a surface S of the separator 10.

Subsequently, as shown in FIG. 3C, the positive plate 6 and the negative plate 8 are prepared. Each separator 10 is oriented such that the spacers 36 face the negative plate 8 side. Then, a separator 10, the negative plate 8, a separator 10, and the positive plate 6 are laminated in this order. Accordingly, as shown in FIG. 3D, the electrode group 2 is obtained. The electrode group 2 is wound in a spiral shape and housed together with the non-aqueous electrolyte in the exterior can 4. Then, the sealing plate 26 is fitted into the exterior can 4, so that the secondary battery 1 is obtained.

As described above, the secondary battery 1 according to the present embodiment includes spacers 36 interposed between the negative plate 8 and a separator 10. Accordingly, a space 40 can be formed between the negative plate 8 and the separator 10, which sandwich spacers 36. By providing the space 40 between the negative plate 8 and the separator 10, lithium metal can be made to deposit within the space 40 when the secondary battery 1 is charged. Therefore, the expansion of the electrode group 2 due to the deposition of lithium metal can be suppressed.

Also, the secondary battery 1 includes the low porosity portions 38, having a smaller porosity than the separator 10, that each are fitted into the separator 10 in an area where the separator 10 and a spacer 36 overlap when viewed from the laminating direction of the separator 10 and the negative plate 8. When the low porosity portions 38 are not provided, lithium ions in the non-aqueous electrolyte can reach the interface between the separator 10 and each spacer 36 through the pores 10a in the separator 10. Accordingly, lithium metal may deposit at the interface between the separator 10 and each spacer 36. However, the expansion of the electrode group 2 due to the deposition of lithium metal at the interface is difficult to absorb in the space 40.

On the other hand, providing a low porosity portion 38 at a position in the separator 10 that overlaps a spacer 36 can inhibit the lithium ions from reaching the interface between the separator 10 and the spacer 36. As a result, the deposition of lithium metal at the interface can be suppressed, so that the expansion of the electrode group 2 can be further suppressed. Therefore, the quality of the secondary battery 1, such as durability, reliability, and safety, can be improved. In particular, in a lithium secondary battery containing lithium metal in the negative electrode mixture layer 34, lithium metal tends to deposit on the negative plate 8 more easily. Therefore, providing the low porosity portions 38 is particularly effective in lithium secondary batteries and can improve the quality while achieving higher energy density of the secondary battery 1.

Also, each low porosity portion 38 of the present embodiment is constituted by a portion where pores 10a in the separator 10 are closed up. This can suppress an increase in the number of parts caused by providing the low porosity portions 38 and can also prevent the complication of the manufacturing process of the secondary battery 1. Also, each low porosity portion 38 has a structure in which pores 10a in the separator 10 are filled with the constituent material of the spacers 36. Therefore, the low porosity portions 38 can be formed more easily. Also, the spacers 36 of the present embodiment have a smaller porosity than the separator 10. This can restrain lithium ions from reaching the interface between the separator 10 and a spacer 36 through the inside of the spacer 36. Therefore, the expansion of the electrode group 2 can be further suppressed.

Also, the method for producing the secondary battery 1 according to the present embodiment includes applying the constituent material ink 36a of the spacers 36 to a surface of a separator 10, which faces the negative plate 8, and infiltrating part of the constituent material ink 36a into pores 10a in the separator 10, thereby forming a spacer 36 and a low porosity portion 38 at the same time. Therefore, the secondary battery 1 including the spacers 36 and the low porosity portions 38 can be produced more easily.

### Second Embodiment

The secondary battery 1 according to the second embodiment includes configurations in common with the secondary battery 1 in the first embodiment, except the structure of each low porosity portion 38 and the method for forming the low porosity portions 38. In the following, the secondary battery 1 according to the present embodiment will be described mainly for configurations different from those in the first embodiment, and description of configurations in common will be briefly given or may be omitted.

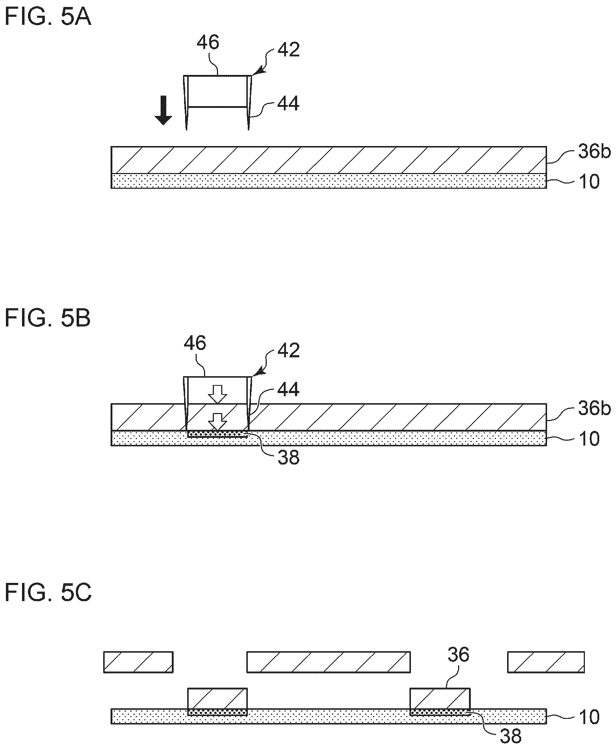

Each low porosity portion 38 of the present embodiment is constituted by a portion where pores 10a in the separator 10 are collapsed. The collapsed portion means a portion where pores 10a are reduced in volume or lost due to deformation of walls that form the pores 10a. The secondary battery 1 including such a low porosity portion 38 can be obtained using the following producing method, for example. FIG. 5A through FIG. 5C are diagrams that show a method for producing the secondary battery 1 according to the second embodiment.

First, as shown in FIG. 5A, a constituent material sheet 36b of the spacers 36 is laminated onto a surface of the separator 10 that is to face the negative plate 8. As an example, the constituent material sheet 36b is a sheet (film) of the resin constituting the spacers 36. Then, a die cutter 42 is pressed against an area of the constituent material sheet 36b where a spacer 36 is to be formed. The die cutter 42 includes a cutting blade 44 corresponding to the contour of a spacer 36, and a cushion member 46 disposed in a space enclosed by the cutting blade 44. As an example, the cushion member 46 is constituted by a flexible material, such as a silicone sheet.

The length of a portion of the cutting blade 44 protruding from the cushion member 46 is set shorter than the thickness of the constituent material sheet 36b. Therefore, as shown in FIG. 5B, the constituent material sheet 36b is pressed against the separator 10 by the cushion member 46 and cut by the cutting blade 44. That is, when the cutting blade 44 enters a position where the constituent material sheet 36b is punched, the constituent material sheet 36b located within the cutting blade 44 is pressed by the cushion member 46. The constituent material sheet 36b pressed by the cushion member 46 then presses the separator 10.

As a result, pores 10a are crushed and closed up, and a low porosity portion 38 is formed in a position that overlaps the spacer 36. In the portion of the constituent material sheet 36b pressed by the cushion member 46, deformation in an in-plane direction of the constituent material sheet 36b is restricted by the cutting blade 44. This enables the pressure applied by the cushion member 46 to the constituent material sheet 36b to be transmitted to the separator 10 more easily. Therefore, pores 10a can be collapsed more certainly. The pressure applied by the die cutter 42 to the constituent material sheet 36b may be 1 MPa to 50 MPa, for example. Also, to the surface of the constituent material sheet 36b, an adhesive is applied to fix the constituent material sheet 36b to the separator 10. The adhesive may infiltrate into pores 10a when the constituent material sheet 36b is pressed against the separator 10 and may close up the pores 10a. Therefore, the low porosity portions 38 may be formed also by the infiltration of the adhesive.

Thereafter, as shown in FIG. 5C, unnecessary portions of the constituent material sheet 36b other than the spacers 36 are peeled off from the separator 10. Through the process described above, the spacers 36 protruding from a surface of the separator 10 and the low porosity portions 38 structured to include collapsed pores 10a can be formed on the separator 10.

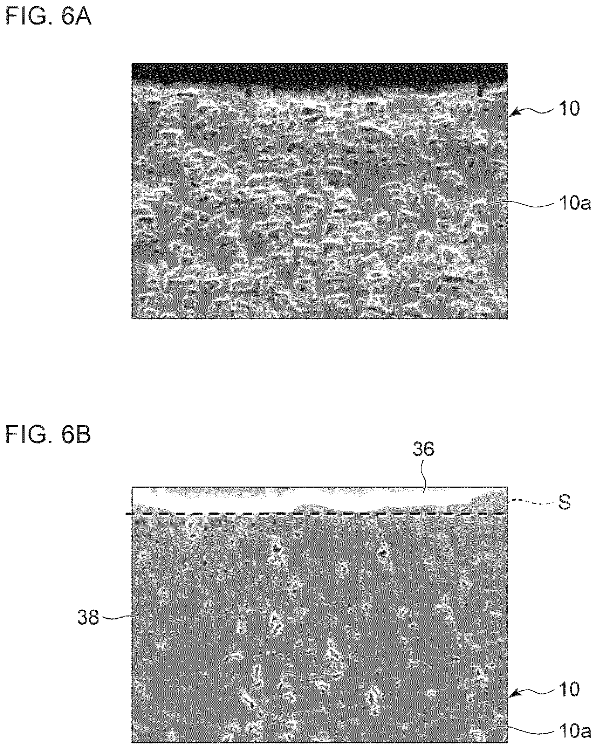

FIG. 6A is a SEM photograph of an unpressurized area of the separator 10. FIG. 6B is a SEM photograph of a pressurized area of the separator 10. As shown in FIG. 6A, in an area where the constituent material sheet 36b is not pressed against the separator 10, a large number of pores 10a can be seen within the separator 10. On the other hand, as shown in FIG. 6B, in an area where the constituent material sheet 36b is pressed against the separator 10, some of the pores 10a are crushed and closed up, and a low porosity portion 38 is formed within the separator 10.

Thereafter, as in the first embodiment, a separator 10, the negative plate 8, a separator 10, and the positive plate 6 are laminated and wound. Then, the electrode group 2 is sealed together with the non-aqueous electrolyte in the exterior can 4, obtaining the secondary battery 1.

In the aforementioned embodiments, matters to which design modifications may be made are emphasized with the expression of "of the present embodiment", "in the present embodiment", or the like. However, design modifications may also be made to matters without such expression. Also, optional combinations of the constituting elements included in each embodiment may also be employed as additional modes of the present disclosure. Further, the hatching provided on the cross sections in the drawings does not limit the materials of the objects with the hatching.

### First modification

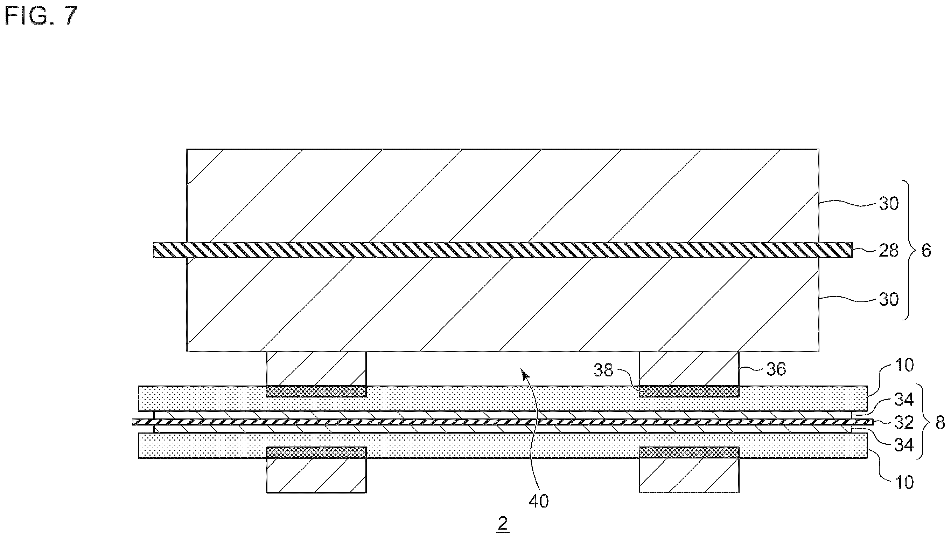

FIG. 7 is a magnified sectional view of part of the electrode group 2 according to the first modification. Although the spacers 36 are interposed between the negative plate 8 and a separator 10 in the first and second embodiments, the spacers 36 may be interposed between the positive plate 6 and a separator 10 as shown in FIG. 7. In this case, the space 40 is formed between the positive plate 6 and the separator 10. The separator 10 has moderate stretchability. Accordingly, when lithium metal deposits on the negative plate 8, the separator 10 is pressed by the lithium metal and expands toward the positive plate 6 side to enter the space 40. This can suppress the expansion of the electrode group 2. Also in the case where the spacers 36 are arranged between the positive plate 6 and the separator 10, forming the low porosity portions 38 by infiltrating the constituent material ink 36a as described in the first embodiment or forming the low porosity portions 38 by pressing the constituent material sheet 36b as described in the second embodiment can be employed.

### Other modifications

The spacers 36 may be interposed between each of the electrode plates of the negative plate 8 and the positive plate 6 and a separator 10. When a spacer 36 is disposed between the negative plate 8 and the separator 10, the spacer 36 may be provided on the negative plate 8, a low porosity portion 38 may be provided in the separator 10, and then each electrode plate and the separator 10 may be laminated. Similarly, when a spacer 36 is disposed between the positive plate 6 and the separator 10, the spacer 36 may be provided on the positive plate 6, a low porosity portion 38 may be provided in the separator 10, and then each electrode plate and the separator 10 may be laminated. In these cases, a low porosity portion 38 can be provided in the separator 10 by, for example, embedding a plate having a smaller porosity than the separator 10 into the separator 10. Alternatively, a low porosity portion 38 may be formed by providing a spacer 36 on an electrode plate or a separator 10, laminating the electrode plate, the spacer 36, and the separator 10, and applying pressure thereto, so that pores 10a in the separator 10 are collapsed by the spacer 36.

### INDUSTRIAL APPLICABILITY

The present disclosure is applicable to secondary batteries and methods for producing secondary batteries.

### REFERENCE SIGNS LIST

1 secondary battery, 6 positive plate, 8 negative plate, 10 separator, 10a pore, 36 spacer, 36a constituent material ink, 36b constituent material sheet, 38 low porosity portion, 40 space

## Claims

1. A secondary battery (1) comprising a positive plate (6), a negative plate (8), a separator (10), which is porous, disposed between the positive plate (6) and the negative plate (8), and a non-aqueous electrolyte, lithium metal depositing on the negative plate (8) during charging and the lithium metal dissolving in the non-aqueous electrolyte during discharge in the secondary battery (1), the secondary battery (1) comprising:
a spacer (36) interposed between at least one of electrode plates of the negative plate (8) and the positive plate (6) and the separator (10) to form a space (40) between the electrode plate (6, 8) and the separator (10); and
a low porosity portion (38) that has a smaller porosity than the separator (10) and that is fitted into the separator (10) in an area where the separator (10) and the spacer (36) overlap when viewed from a laminating direction of the separator (10) and the electrode plate (6, 8),
**characterized in that** a fitting depth of a portion of each low porosity portion (38) fitted into the separator (10) is 10% or greater of the thickness of the separator (10).

2. The secondary battery (1) according to Claim 1, wherein the low porosity portion (38) is constituted by a portion where a pore (10a) in the separator (10) is closed up.

3. The secondary battery (1) according to Claim 2, wherein the low porosity portion (38) is constituted by a portion where a pore (10a) in the separator (10) is filled with a constituent material of the spacer (36).

4. The secondary battery (1) according to Claim 2, wherein the low porosity portion (38) is constituted by a portion where a pore (10a) in the separator (10) is collapsed.

5. The secondary battery (1) according to any one of Claims 1 through 4, wherein the spacer (36) has a smaller porosity than the separator (10).

6. A method for producing a secondary battery (1) comprising a positive plate (6), a negative plate (8), a separator (10), which is porous, disposed between the positive plate (6) and the negative plate (8), and a non-aqueous electrolyte, lithium metal depositing on the negative plate (8) during charging and the lithium metal dissolving in the non-aqueous electrolyte during discharge in the secondary battery (1), the method comprising:
applying constituent material ink (36a) of a spacer (36) to at least one of a surface of the separator (10) that faces the negative plate (8) or a surface of the separator (10) that faces the positive plate (6); and
infiltrating part of the constituent material ink (36a) into a pore (10a) in the separator (10) to form a spacer (36) that forms a space (40) between at least one of electrode plates of the negative plate (8) and the positive plate (6) and the separator (10) and also to form a low porosity portion (38) that has a smaller porosity than the separator (10) and that is fitted into the separator (10) in an area where the separator (10) and the spacer (36) overlap when viewed from a laminating direction of the separator (10) and the electrode plate (6, 8),
**characterized in that** a fitting depth of a portion of each low porosity portion (38) fitted into the separator (10) is 10% or greater of the thickness of the separator (10).

7. A method for producing a secondary battery (1) comprising a positive plate (6), a negative plate (8), a separator (10), which is porous, disposed between the positive plate (6) and the negative plate (8), and a non-aqueous electrolyte, lithium metal depositing on the negative plate (8) during charging and the lithium metal dissolving in the non-aqueous electrolyte during discharge in the secondary battery (1), the method comprising:
laminating a constituent material sheet (36b) of a spacer (36) onto at least one of a surface of the separator (10) that faces the negative plate (8) or a surface of the separator (10) that faces the positive plate (6); and
pressing the constituent material sheet (36b) against the separator (10) to collapse a pore (10a) in the separator (10) and cutting the constituent material sheet (36b) to form a spacer (36) that forms a space (40) between at least one of electrode plates of the negative plate (8) and the positive plate (6) and the separator (10) and also to form a low porosity portion (38) that has a smaller porosity than the separator (10) and that is fitted into the separator (10) in an area where the separator (10) and the spacer (36) overlap when viewed from a laminating direction of the separator (10) and the electrode plate (6, 8),
**characterized in that** a fitting depth of a portion of each low porosity portion (38) fitted into the separator (10) is 10% or greater of the thickness of the separator (10).

## Patentansprüche

1. Sekundärbatterie (1), mit einer Positivplatte (6), einer Negativplatte (8), einem Separator (10), der porös und zwischen der Positivplatte (6) und der Negativplatte (8) angeordnet ist, und einem nichtwässrigen Elektrolyten, wobei sich Lithiummetall während eines Ladens auf der Negativplatte (8) abscheidet und sich das Lithiummetall während eines Entladens in dem nichtwässrigen Elektrolyten in der Sekundärbatterie (1) auflöst, wobei die Sekundärbatterie (1) aufweist:
einen Abstandshalter (36), der zwischen mindestens einer der Elektrodenplatten aus der Negativplatte (8) und der Positivplatte (6) und dem Separator (10) angeordnet ist, um einen Zwischenraum (40) zwischen der Elektrodenplatte (6, 8) und dem Separator (10) zu bilden; und
einen Abschnitt mit geringer Porosität (38), der eine geringere Porosität als der Separator (10) aufweist und der in den Separator (10) in einem Bereich eingepasst ist, in dem sich der Separator (10) und der Abstandshalter (36) aus Sicht einer Laminierungsrichtung des Separators (10) und der Elektrodenplatte (6, 8) überlappen,
**dadurch gekennzeichnet, dass** eine Einpasstiefe eines Abschnitts jedes Abschnitts mit geringer Porosität (38), der in den Separator (10) eingepasst ist, 10 % oder mehr der Dicke des Separators (10) beträgt.

2. Sekundärbatterie (1) nach Anspruch 1, wobei der Abschnitt mit geringer Porosität (38) durch einen Abschnitt gebildet wird, in dem eine Pore (10a) in dem Separator (10) geschlossen ist.

3. Sekundärbatterie (1) nach Anspruch 2, wobei der Abschnitt mit geringer Porosität (38) durch einen Abschnitt gebildet wird, in dem eine Pore (10a) in dem Separator (10) mit einem Bestandteilsmaterial des Abstandshalters (36) gefüllt ist.

4. Sekundärbatterie (1) nach Anspruch 2, wobei der Abschnitt mit geringer Porosität (38) durch einen Abschnitt gebildet wird, in dem eine Pore (10a) in dem Separator (10) kollabiert ist.

5. Sekundärbatterie (1) nach einem der Ansprüche 1 bis 4, wobei der Abstandshalter (36) eine geringere Porosität als der Separator (10) aufweist.

6. Verfahren zum Herstellen einer Sekundärbatterie (1) mit einer Positivplatte (6), einer Negativplatte (8), einem Separator (10), der porös und zwischen der Positivplatte (6) und der Negativplatte (8) angeordnet ist, und einem nichtwässrigen Elektrolyten, wobei sich Lithiummetall während eines Ladens auf der Negativplatte (8) abscheidet und sich das Lithiummetall während eines Entladens in dem nichtwässrigen Elektrolyten in der Sekundärbatterie (1) auflöst, wobei das Verfahren aufweist:
Auftragen einer Bestandteilsmaterial-Tinte (36a) eines Abstandshalters (36) auf mindestens eine Oberfläche des Separators (10), die der Negativplatte (8) zugewandt ist, oder eine Oberfläche des Separators (10), die der Positivplatte (6) zugewandt ist; und
Infiltrieren eines Teils der Bestandteilsmaterial-Tinte (36a) in eine Pore (10a) in dem Separator (10), um einen Abstandshalter (36) zu bilden, der einen Zwischenraum (40) zwischen mindestens einer der Elektrodenplatten aus der Negativplatte (8) und der Positivplatte (6) und dem Separator (10) bildet, und um ferner einen Abschnitt mit geringer Porosität (38) zu bilden, der eine geringere Porosität als der Separator (10) aufweist und der in den Separator (10) in einem Bereich eingepasst ist, in dem sich der Separator (10) und der Abstandshalter (36) aus Sicht einer Laminierungsrichtung des Separators (10) und der Elektrodenplatte (6, 8) überlappen,
**dadurch gekennzeichnet, dass** eine Einpasstiefe eines Abschnitts jedes Abschnitts mit geringer Porosität (38), der in den Separator (10) eingepasst ist, 10 % oder mehr der Dicke des Separators (10) beträgt.

7. Verfahren zum Herstellen einer Sekundärbatterie (1) mit einer Positivplatte (6), einer Negativplatte (8), einem Separator (10), der porös und zwischen der Positivplatte (6) und der Negativplatte (8) angeordnet ist, und einem nichtwässrigen Elektrolyten, wobei sich Lithiummetall während eines Ladens auf der Negativplatte (8) abscheidet und sich das Lithiummetall während eines Entladens in dem nichtwässrigen Elektrolyten in der Sekundärbatterie (1) auflöst, wobei das Verfahren aufweist:
Laminieren eines Bestandteilsmaterial-Bogens (36b) eines Abstandshalters (36) auf mindestens eine Oberfläche des Separators (10), die der Negativplatte (8) zugewandt ist, oder eine Oberfläche des Separators (10), die der Positivplatte (6) zugewandt ist; und
Drücken des Bestandteilsmaterial-Bogens (36b) gegen den Separator (10), um eine Pore (10a) in dem Separator (10) zu kollabieren, und Schneiden des Bestandteilsmaterial-Bogens (36b), um einen Abstandshalter (36) zu bilden, der einen Zwischenraum (40) zwischen mindestens einer der Elektrodenplatten aus der Negativplatte (8) und der Positivplatte (6) und dem Separator (10) bildet, und um ferner einen Abschnitt mit geringer Porosität (38) zu bilden, der eine geringere Porosität als der Separator (10) aufweist und der in den Separator (10) in einem Bereich eingepasst ist, in dem sich der Separator (10) und der Abstandshalter (36) aus Sicht einer Laminierungsrichtung des Separators (10) und der Elektrodenplatte (6, 8) überlappen,
**dadurch gekennzeichnet, dass** eine Einpasstiefe eines Abschnitts jedes Abschnitts mit geringer Porosität (38), der in den Separator (10) eingepasst ist, 10 % oder mehr der Dicke des Separators (10) beträgt.

## Revendications

1. Une batterie secondaire (1) comprenant une plaque positive (6), une plaque négative (8), un séparateur (10), qui est poreux et disposé entre la plaque positive (6) et la plaque négative (8), et un électrolyte non aqueux, du métal lithium se déposant sur la plaque négative (8) pendant une charge et le métal lithium se dissolvant dans l'électrolyte non aqueux pendant une décharge dans la batterie secondaire (1), la batterie secondaire (1) comprenant :
un espaceur (36) interposé entre au moins l'une des plaques d'électrode parmi la plaque négative (8) et la plaque positive (6) et le séparateur (10) pour former un espace (40) entre la plaque d'électrode (6, 8) et le séparateur (10) ; et
une partie à faible porosité (38) qui présente une porosité inférieure à celle du séparateur (10) et qui est faite entrer dans le séparateur (10) dans une zone où le séparateur (10) et l'espaceur (36) se chevauchent lorsqu'on les observe depuis une direction de stratification du séparateur (10) et de la plaque d'électrode (6, 8),
**caractérisée en ce qu'**une profondeur de faire entrer d'une partie de chaque partie à faible porosité (38) ajustée dans le séparateur (10) est supérieure ou égale à 10 % de l'épaisseur du séparateur (10).

2. La batterie secondaire (1) selon la revendication 1, dans laquelle la partie à faible porosité (38) est constituée par une partie où un pore (10a) dans le séparateur (10) est obturé.

3. La batterie secondaire (1) selon la revendication 2, dans laquelle la partie à faible porosité (38) est constituée par une partie où un pore (10a) dans le séparateur (10) est rempli d'un matériau constitutif de l'espaceur (36).

4. La batterie secondaire (1) selon la revendication 2, dans laquelle la partie à faible porosité (38) est constituée par une partie où un pore (10a) dans le séparateur (10) est affaissé.

5. La batterie secondaire (1) selon l'une quelconque des revendications 1 à 4, dans laquelle l'espaceur (36) présente une porosité inférieure à celle du séparateur (10).

6. Un procédé de fabrication d'une batterie secondaire (1) comprenant une plaque positive (6), une plaque négative (8), un séparateur (10), qui est poreux et disposé entre la plaque positive (6) et la plaque négative (8), et un électrolyte non aqueux, du métal lithium se déposant sur la plaque négative (8) pendant une charge et le métal lithium se dissolvant dans l'électrolyte non aqueux pendant une décharge dans la batterie secondaire (1), le procédé comprenant : '
une application d'une encre de matériau constitutif (36a) d'un espaceur (36) sur au moins l'une d'une surface du séparateur (10) faisant face à la plaque négative (8) ou d'une surface du séparateur (10) faisant face à la plaque positive (6) ; et
une infiltration d'une partie de l'encre de matériau constitutif (36a) dans un pore (10a) dans le séparateur (10) pour former un espaceur (36) qui forme un espace (40) entre au moins l'une des plaques d'électrode parmi la plaque négative (8) et la plaque positive (6) et le séparateur (10) et également pour former une partie à faible porosité (38) qui présente une porosité inférieure à celle du séparateur (10) et qui est faite entrer dans le séparateur (10) dans une zone où le séparateur (10) et l'espaceur (36) se chevauchent lorsqu'on les observe depuis une direction de stratification du séparateur (10) et de la plaque d'électrode (6, 8),
**caractérisée en ce qu'**une profondeur de faire entrer d'une partie de chaque partie à faible porosité (38) ajustée dans le séparateur (10) est supérieure ou égale à 10 % de l'épaisseur du séparateur (10).

7. Un procédé de fabrication d'une batterie secondaire (1) comprenant une plaque positive (6), une plaque négative (8), un séparateur (10), qui est poreux et disposé entre la plaque positive (6) et la plaque négative (8), et un électrolyte non aqueux, du métal lithium se déposant sur la plaque négative (8) pendant une charge et le métal lithium se dissolvant dans l'électrolyte non aqueux pendant une décharge dans la batterie secondaire (1), le procédé comprenant :
une stratification d'une feuille de matériau constitutif (36b) d'un espaceur (36) sur au moins l'une d'une surface du séparateur (10) faisant face à la plaque négative (8) ou d'une surface du séparateur (10) faisant face à la plaque positive (6) ; et
un pressage de la feuille de matériau constitutif (36b) contre le séparateur (10) pour affaisser un pore (10a) dans le séparateur (10) et un découpage de la feuille de matériau constitutif (36b) pour former un espaceur (36) qui forme un espace (40) entre au moins l'une des plaques d'électrode parmi la plaque négative (8) et la plaque positive (6) et le séparateur (10) et également pour former une partie à faible porosité (38) qui présente une porosité inférieure à celle du séparateur (10) et qui est faite entrer dans le séparateur (10) dans une zone où le séparateur (10) et l'espaceur (36) se chevauchent lorsqu'on les observe depuis une direction de stratification du séparateur (10) et de la plaque d'électrode (6, 8),
**caractérisée en ce qu'**une profondeur de faire entrer d'une partie de chaque partie à faible porosité (38) ajustée dans le séparateur (10) est supérieure ou égale à 10 % de l'épaisseur du séparateur (10).
